# EUROPÄISCHE PATENTSCHRIFT

(11) **EP 3 424 776 B1**
(45) Veröffentlichungstag und Bekanntmachung des Hinweises auf die Patenterteilung: **05.08.2020**
(21) Anmeldenummer: 18181144.9
(22) Anmeldetag: 02.07.2018
(51) Int. Cl.: B60P 3/34, B60P 3/39

(54) **WOHNMOBIL**
MOBILE HOME
CAMPING-CAR

(30) Priorität: 03.07.2017 DE 102017114777
(43) Veröffentlichungstag der Anmeldung: 09.01.2019
(73) Patentinhaber: Uhlhorn, Ralf, 49661 Cloppenburg (DE)
(72) Erfinder: Uhlhorn, Ralf, 49661 Cloppenburg (DE)
(74) Vertreter: Dantz, Jan Henning

(56) Entgegenhaltungen:
- DE-A1- 3 531 394
- US-A- 4 620 335
- US-A1- 2005 161 974
- US-B1- 8 186 744

## Beschreibung

Die vorliegende Erfindung betrifft ein Wohnmobil mit einem Fahrzeuginnenraum, der von Seitenwänden, einem Heck einem Boden und einer Decke umgeben ist, wobei am Heck ein verschiebbares Auszugselement vorgesehen ist, das von einer Fahrposition in eine rückseitig hervorstehende Auszugsposition verschiebbar ist, wobei in dem Auszugselement ein Liegemöbel fixiert ist, das mindestens zwei relativ zueinander verschwenkbare Teile aufweist, die in der Auszugsposition eine Liegefläche ausbilden und in der Fahrposition winklig zueinander ausgerichtet sind, wobei ein rückseities Teil des Liegemöbels horizontal ausgerichtet ist.

Die EP 3 156 282 offenbart ein Wohnmobil mit einem Innenraum, bei dem unterschiedliche Funktionsbereiche vorgesehen sind. Ein Nassbereich soll dabei durch einen Nutzer innerhalb des Wohnmobils verschiebbar sein, um den Innenraum optimal zu nutzen. Solche Wohnmobile gibt es auch mit verschiebbaren und verschwenkbaren Auszugselementen. Gerade Liegemöbel, wie Betten, nehmen im Innenraum eines Wohnmobils viel Platz ein.

Die DE 35 31 394 A1 offenbart ein Wohnmobil mit einer durch eine Hecköffnung hindurch ausziehbaren, durch einen Boden, zwei Seitenwände, eine Rückwand und ein Dach begrenzten, einseitig zum Fahrzeuginneren hin offenen Verlängerungskoje, die in der eingeschobenen Stellung vollständig im Fahrzeug untergebracht ist und in der ausgezogenen Stellung zum überwiegenden Teil aus dem Fahrzeug herausragt. In der Verlängerungskoje sind mehrere Polsterteile gelenkig miteinander verbunden und können eine Liegefläche oder ein Sitzmöbel ausbilden. In der eingefahrenen Position der Verlängerungskoje stehen die Polsterteile nach oben hervor und benötigen viel Stauraum.

Es ist daher Aufgabe der vorliegenden Erfindung, ein Wohnmobil zu schaffen, das eine optimierte Raumausnutzung für ein Liegemöbel schafft.

Diese Aufgabe wird mit einem Wohnmobil mit den Merkmalen des Anspruches 1 gelöst.

Das erfindungsgemäße Wohnmobil umfasst am Heck ein verschiebbares Auszugselement, an dem ein Liegemöbel fixiert ist, das mindestens zwei relativ zueinander verschwenkbare Teile aufweist, die in der Auszugsposition eine Liegefläche ausbilden und in der Fahrposition winklig zueinander ausgerichtet sind, wobei ein vorderes Teil des Liegemöbels von einer horizontalen Ausrichtung aus einer Liegeposition nach unten abklappbar ist. Dadurch kann das Auszugselement mit dem Liegemöbel in einer Fahrposition kompakt angeordnet werden, wobei das Liegemöbel deutlich weniger Raum einnimmt als in einer ebenen Liegeposition, da die beiden Teile verschwenkbar zueinander ausgerichtet sind. Erst in einer Standposition kann das Auszugselement in die hervorstehende Auszugsposition verschoben werden, um das Liegemöbel mit einer Liegefläche anzuordnen, bei der die zwei verschwenkbaren Teile und ein optional darauf angeordnetes Polster oder eine Matratze flächenbündig ausgerichtet sind.

Der Begriff "Wohnmobil" im Sinne der Anmeldung soll dabei alle Fahrzeugtypen umfassen, in denen ein begehbarer Innenraum vorgesehen ist, also auch Kastenwagen, Lieferwagen oder andere Fahrzeuge mit einem entsprechend großen Innenraum. Vorzugsweise besitzt das Wohnmobil einen Boden aus Metall für eine stabile Abstützung von Personen und Gegenständen. Zudem umfassen die Seitenwände des Fahrzeuges bevorzugt ebenfalls eine Lage aus Metall und sind somit stabil ausgestaltet, so dass das Wohnmobil auch für höhere Geschwindigkeiten geeignet ist. Das Wohnmobil kann beispielsweise dadurch hergestellt werden, dass bei einem Kastenwagen die Hecktüren entfernet werden und an der so gebildeten rückseitigen Öffnung ein Auszugelement an zwei oder mehr Auszugsführungen verschiebbar angeordnet wird.

Ein rückseitiges Teil des Liegemöbels ist horizontal ausgerichtet und ein vorderes Teil des Liegemöbels von einer horizontalen Ausrichtung (Liegeposition) nach unten abklappbar. Die Begriffe "vorne" und "rückseitig" beziehen sich dabei auf die Fahrtrichtung des Fahrzeuges. Das Abklappen des vorderen Teils von der horizontalen Ausrichtung nach unten kann dabei um mindestens 70° erfolgen, vorzugsweise im Wesentlichen um 90°. Optional kann auch ein noch weiteres Umklappen erfolgen. Das Liegemöbel weist vorzugsweise eine biegbare Matratze auf, die auf den mindestens zwei relativ zueinander verschwenkbaren Teilen abgestützt ist. Vorzugsweise sind nur zwei relativ zueinander verschwenkbare Teile vorgesehen, so dass die Handhabung vereinfacht wird. Die Schwenkachse ist dabei vorzugsweise in einem mittleren Bereich des Liegemöbels angeordnet, wobei die beiden Teile eine unterschiedliche Länge besitzen können, beispielsweise kann die Gesamtlänge in 1/3 zu 2/3 zwischen den beiden Teilen aufgeteilt sein. Dadurch wird ein Spalt an der Auflage des Liegemöbels in einem Rückenbereich vermieden, wenn das längere Teil als Rückenteil und das kürzere Teil als Fußteil eingestzt wird. Die Länge des kürzeren Teils beträgt vorzugsweise mindestens 25% der Gesamtlänge.

Für einen optimalen Liege- oder Schlafkomfort erstreckt sich das Liegemöbel vorzugsweise über die gesamte innere Breite des Auszugselementes. Dadurch muss der Nutzer des Wohnmobils nicht auf Schlafkomfort verzichten, obwohl das Liegemöbel, insbesondere das Bett, in einer Fahrposition nur geringen Stauraum benötigt.

In einer weiteren Ausgestaltung ist unterhalb des Liegemöbels ein von außen zugängliches Aufbewahrungsfach vorgesehen, das über ein zu öffnendes Verschlusselement zugänglich ist. Gerade wenn das rückseitige Teil des Liegemöbels starr mit dem Auszugselement verbunden ist, kann unterhalb dieses starren Teils noch ein Aufbewahrungsfach vorgesehen werden, um den Stauraum in dem Auszugselement optimal zu nutzen.

Das Auszugselement ist vorzugswiese kastenförmig mit einer zum Innenraum des Fahrzeuges vorgesehenen vorderen Öffnung, wobei die Wände des Auszugselementes vorzugsweise isolierend ausgebildet sind, insbesondere durch Sandwichelemente, beispielsweise mit inneren und äußeren Deckschalen, zwischen denen eine Isolierschicht vorgesehen ist. Dadurch können die Wandelemente auch mit geringem Eigengewicht hergestellt werden.

Das Auszugselement ist vorzugsweise von einer umlaufenden Dichtung umgeben, die am Heck des Fahrzeuges fixiert ist. Dadurch kann beim Ausziehen des Auszugselementes die Dichtung an den Wand- oder Deckenelementen des Auszugselementes anliegen und verhindert somit einen Eintritt von Feuchtigkeit bei ausgezogenem Auszugselement. Der Schiebeweg des Auszugselementes beträgt vorzugsweise mindestens 1 m, beispielswiese zwischen 1,2 bis 1,5 m.

Für eine stabile Abstützung des Auszugselementes ist dieses an mindestens zwei Auszugsführungen verfahrbar gehalten. Die Auszugsführungen können dabei im Bodenbereich des Auszugselementes und des Fahrzeuges angeordnet sein, so dass diese im Innenraum nicht sichtbar sind. Vorzugsweise ist zum Verfahren des Auszugselementes ein Antrieb vorgesehen, insbesondere ein elektrischer Antrieb, so dass ein leichtgängiges Betätigen möglich ist. Vorzugsweise wird das Liegemöbel beim Ausfahren des Auszugselementes automatisch von der abgeklappten in die flächenbündige Position bewegt. Auch ein manuelles Hochklappen des abgeklappten Teils des Liegemöbels ist natürlich möglich.

Die Erfindung wird nachfolgend anhand eines Ausführungsbeispiels mit Bezug auf die beigefügten Zeichnungen näher erläutert. Es zeigen:

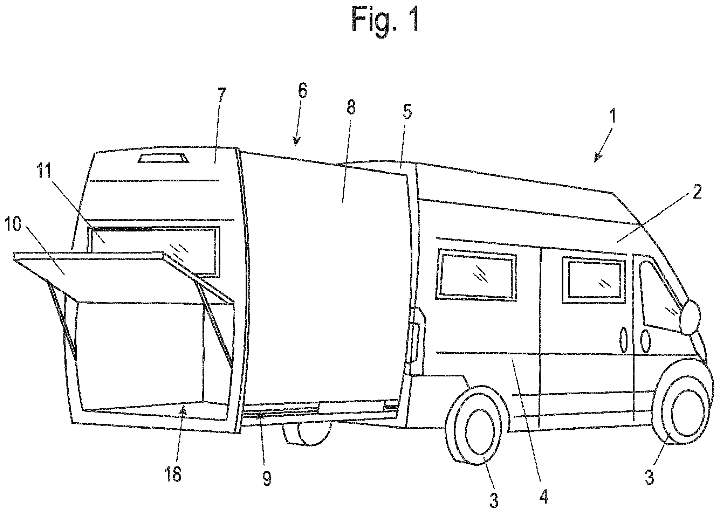

- Figur 1: eine perspektivische Ansicht eines erfindungsgemäßen Wohnmobils;
- Figur 2: eine geschnittene Draufsicht auf das Wohnmobil der Figur 1;
- Figur 3: eine geschnittene Ansicht durch das Wohnmobil mit Blickrichtung nach hinten, und
- Figur 4: eine geschnittene Seitenansicht durch das Wohnmobil der Figur 1.

Ein Wohnmobil 1 umfasst einen Fahrzeugkörper 2, der überwiegend aus Metall bestehen kann und der auf Rädern 3 verfahrbar ist und einen Innenraum durch Seitenwände 4, einen Boden und eine Decke umschließt. An der Vorderseite ist ein Fahrgastraum vorgesehen, während an der Rückseite ein Heck 5 vorgesehen ist. Das Heck 5 ist in der Fahrposition als rückseitiges Wandelement ausgebildet, kann aber im Stand des Wohnmobils 1 erweitert werden. Hierfür ist ein verschiebbares Auszugselement 6 vorgesehen, das kastenförmig ausgebildet ist und eine rückseitige Wand 7 aufweist, sowie Seitenwände 8, eine Decke und einen Boden. Die Fläche des Auszugselementes 6 von der Rückseite des Wohnmobils 1 gesehen nimmt vorzugsweise mindestes 80% der gesamten rückseitigen Fläche des Fahrzeugkörpers 2 ein. Zum Innenraum des Fahrzeugkörpers 2 ist das Auszugselement 6 zumindest bereichsweise offen ausgebildet. Die rückseitige Wand 7 kann in der Fahrposition flächenbündig mit dem Heck 5 des Fahrzeuges angeordnet sein, und kann in die dargestellte hervorstehende Position um mindestens 1 m, vorzugsweise zwischen 1,2 bis 1,5 m, nach hinten verfahren werden.

Für das Verschieben des Auszugselementes 6 sind im Bodenbereich zwei Auszugsführungen 9 vorgesehen, die relativ zueinander verfahrbare Schienen aufweisen und das Gewicht des Auszugselementes 6 abstützen. Ferner ist ein nicht dargestellter Antrieb vorgesehen, mittels dem das Auszugselement 6 verfahrbar ist. An der rückseitigen Wand 7 des Auszugselementes 6 ist eine verschwenkbare Klappe 10 vorgesehen, die als Verschlusselement einen von außen zugänglichen Stauraum 18 verschließt. Oberhalb der Klappe 10 ist ein Sichtfenster 11 vorgesehen, wobei auch andere Ausgestaltungen der rückseitigen Wand 7 möglich sind.

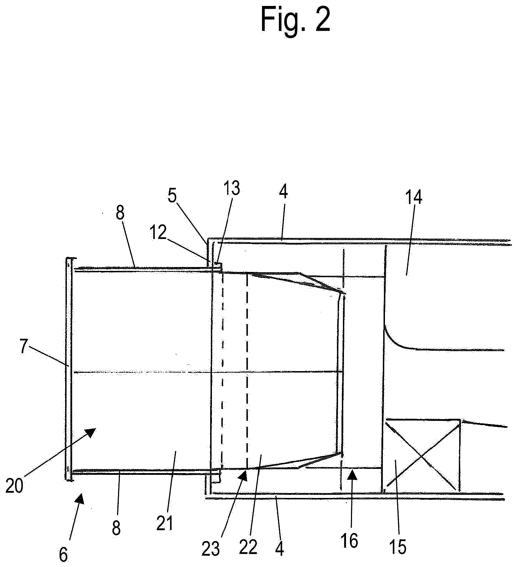

Wie in Figur 2 erkennbar ist, befindet sich in dem Auszugselement 6 ein Liegemöbel 20, insbesondere ein Bett, das ein rückseitiges Teil 21 aufweist, das zusammen mit dem Auszugselement 6 verschiebbar ist. Das rückseitige Teil 21 ist gelenkig mit einem vorderen Teil 22 des Liegemöbels 20 verbunden, das von einer abgeklapptem Position in eine angehobene Position verschwenkt werden kann, in der die Teile 21 und 22 im Wesentlichen flächenbündig angeordnet sind. Eine Drehachse 23 zwischen dem ersten Teil 21 und dem zweiten Teil 22 befindet sich dabei in einem mittleren Bereich des Liegemöbels 20, insbesondere in einem Bereich vor dem Auszugselement 6. Die Teile 21 und 22 besitzen dabei annähernd die gleiche Größe, wobei das rückseitige Teil 21 zwischen 0 bis 25 % größer ausgebildet sein kann. Das rückseitige Teil 21 erstreckt sich dabei über die gesamte Breite des Innenraumes des Auszugselementes 6. Das vordere Teil 22 kann die gleiche Breite besitzen wie das rückseitige Teil 21 oder auch nach innen zulaufende Kanten besitzen, um die Laufwege zu verbreitern.

An dem Heck 5 ist eine zumindest im oberen Bereich des Auszugselementes 6 umlaufende Dichtung 12 vorgesehen, die das Auszugselement 6 U-förmig oder rahmenförmig umgibt, so dass in der hervorstehenden Position des Auszugselementes 6 keine Feuchtigkeit in den Innenraum 16 eindringt. Ferner kann an dem Auszugselement 6 ein Anschlag 13 vorgesehen sein, der die maximale Auszugsposition begrenzt. Optional kann an dem Anschlag 13 statt der Dichtung 12 oder zusätzlich zu dieser ein Dichtelement vorgesehen sein.

Wie in Figur 2 gezeigt ist, befinden sich im Innenraum 16 des Fahrzeugkörpers 2 Aufbauten, wie ein Bad 14 oder ein Kochbereich 15, die stationär angeordnet sein können und durch das Verfahren des Auszugselementes 6 nicht beeinträchtigt werden. Das Liegemöbel 20 nimmt mit abgeklapptem Teil 22 deutlich weniger Stauraum ein als in einer flächenbündigen Position, wenn das Auszugselement 6 nach hinten hervorsteht.

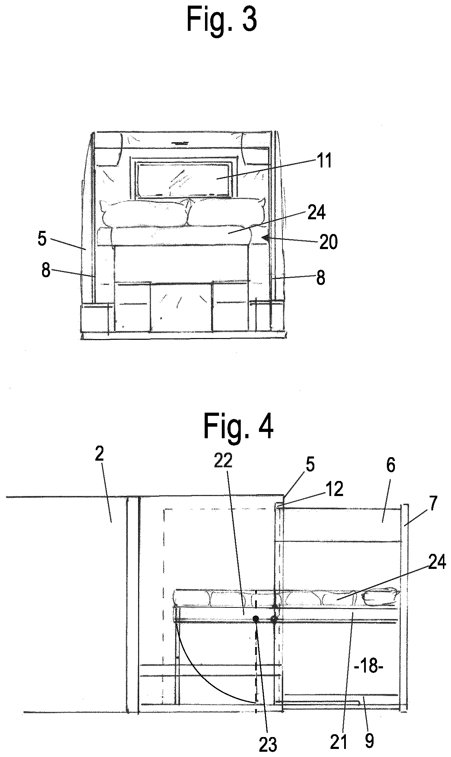

In Figur 3 ist das Liegemöbel 20 gezeigt, das als Bett ausgebildet ist, wobei eine biegbare Matratze 24 auf dem rückseitigen Teil 21 und dem vorderen Teil 22 angeordnet ist, vorzugsweise über Befestigungsmittel auch fixiert ist.

Die Wände des Auszugselementes können wärmeisolierend ausgebildet sein, beispielsweise durch Nutzung von Verbundmaterialien mit einer äußeren und einer inneren Deckschicht, zwischen denen ein wärmeisolierendes Material, beispielsweise ein Hartschaum, vorgesehen ist.

In Figur 4 ist das Liegemöbel 20 in einer ausgezogenen Position gezeigt, in der die Teile 21 und 22 flächenbündig ausgerichtet sind. Die Drehachse 23 zwischen den Teilen 21 und 22 befindet sich im vorderen Bereich des Auszugselementes 6, das in der hervorstehenden Position im Bereich des Hecks 5 des Fahrzeuges angeordnet ist. Es ist erkennbar, dass unterhalb des rückseitigen Teils 21 der Stauraum 18 vorgesehen ist, der von außen zugänglich ist. Das Teil 21 ist vorzugsweise gegenüber dem Stauraum 18 abgedichtet angeordnet.

In dem dargestellten Ausführungsbeispiel wird das vordere Teil 22 beim Bewegen des Auszugselementes 6 in die Fahrposition um etwa 90° abgeklappt. Es ist natürlich auch möglich, das Teil 22 um einen größeren Winkel abzuklappen, insbesondere wenn der Stauraum 18 verkleinert wird oder weggelassen wird. Dann kann optional auch ein Abklappen um 180° erfolgen. Zudem können statt zwei relativ zueinander verschwenkbare Teile 21 und 22 auch mehr verschwenkbare Teile vorgesehen werden, beispielswiese kann das Liegemöbel 20 relativ zueinander verschwenkbare Teile aufweisen, die vollständig in dem Auszugselement 6 angeordnet werden können. Dadurch wird der Stauraum für das Liegemöbel 20 noch weiter reduziert.

### Bezugszeichenliste

- 1: Wohnmobil
- 2: Fahrzeugkörper
- 3: Rad
- 4: Seitenwand
- 5: Heck
- 6: Auszugselement
- 7: Wand
- 8: Seitenwand
- 9: Auszugsführung
- 10: Klappe
- 11: Sichtfenster
- 12: Dichtung
- 13: Anschlag
- 14: Bad
- 15: Kochbereich
- 16: Innenraum
- 18: Stauraum
- 20: Liegemöbel
- 21: Teil
- 22: Teil
- 23: Drehachse
- 24: Matratze

## Patentansprüche

1. Wohnmobil (1) mit einem Fahrzeuginnenraum, der von Seitenwänden (4), einem Heck (5) einem Boden und einer Decke umgeben ist, wobei am Heck (5) ein verschiebbares Auszugselement (6) vorgesehen ist, das von einer Fahrposition in eine rückseitig hervorstehende Auszugsposition verschiebbar ist, wobei in dem Auszugselement (6) ein Liegemöbel (20) fixiert ist, das mindestens zwei relativ zueinander verschwenkbare Teile (21, 22) aufweist, die in der Auszugsposition eine Liegefläche ausbilden und in der Fahrposition winklig zueinander ausgerichtet sind, wobei ein rückseitiges Teil (21) des Liegemöbels (20) horizontal ausgerichtet ist, **dadurch gekennzeichnet, dass** ein vorderes Teil (22) des Liegemöbels (20) von einer horizontalen Ausrichtung aus einer Liegeposition nach unten abklappbar ist.

2. Wohnmobil nach Anspruch 1, **dadurch gekennzeichnet, dass** das Liegemöbel (20) eine biegbare Matratze (24) aufweist, die auf mindestens zwei verschwenkbaren Teilen (21, 22) abgestützt ist.

3. Wohnmobil nach Anspruch 1 oder 2, **dadurch gekennzeichnet, dass** sich das Liegemöbel (20) über die gesamte innere Breite des Auszugselementes (6) erstreckt.

4. Wohnmobil nach einem der vorhergehenden Ansprüche, **dadurch gekennzeichnet, dass** unterhalb des Liegemöbels (20) ein vom außen zugängliches Aufbewahrungsfach (18) ausgebildet ist, das über ein zu öffnendes Verschlusselement (10) verschließbar ist.

5. Wohnmobil nach einem der vorhergehenden Ansprüche, **dadurch gekennzeichnet, dass** das Auszugselement (6) kastenförmig mit einer Öffnung zum Fahrzeuginnenraum und mit isolierenden Wandelementen ausgebildet ist.

6. Wohnmobil nach einem der vorhergehenden Ansprüche, **dadurch gekennzeichnet, dass** um das Auszugselement (6) eine umlaufende Dichtung (12) vorgesehen ist, die am Heck (5) des Fahrzeuges fixiert ist.

7. Wohnmobil nach einem der vorhergehenden Ansprüche, **dadurch gekennzeichnet, dass** das Auszugselement (6) über mindestens 1 m verschiebbar ist, vorzugsweise zwischen 1,2 m bis 1,5 m.

8. Wohnmobil nach einem der vorhergehenden Ansprüche, **dadurch gekennzeichnet, dass** das Auszugselement (6) an mindestens zwei Auszugsführungen (9) verfahrbar gehalten ist.

9. Wohnmobil nach einem der vorhergehenden Ansprüche, **dadurch gekennzeichnet, dass** ein Antrieb zum Bewegen des Auszugselementes (6) vorgesehen ist.

## Claims

1. Mobile home (1) with a vehicle interior, which is surrounded by side walls (4), a rear (5), a floor and a ceiling, wherein a displaceable pull-out element (6) is provided at the rear (5), which can be displaced from a driving position into a pull-out position projecting at the rear, wherein a reclining furniture (20) is fixed in the pull-out element (6), which comprises at least two parts (21, 22) being pivotable relative to each other and which form a lying surface in the extended position and are oriented at an angle to one another in the travel position, wherein a rear part (21) of the reclining furniture (20) is oriented horizontally, **characterized in that** a front part (22) of the reclining furniture (20) can be folded downwards from a horizontal orientation from a lying position.

2. Mobile home according to claim 1, **characterized in that** the reclining furniture (20) comprises a bendable mattress (24) which is supported on the at least two pivotable parts (21, 22).

3. Mobile home according to claim 1 or 2, **characterized in that** the reclining furniture (20) extends over the entire inner width of the pull-out element (6).

4. Mobile home according to one of the preceding claims, **characterized in that** a storage compartment (18) accessible from the outside is formed underneath the reclining furniture (20), which can be closed by means of a closure element (10) which can be opened.

5. Mobile home according to one of the preceding claims, **characterized in that** the pull-out element (6) is box-shaped with an opening to the vehicle interior and with insulating wall elements.

6. Mobile home according to one of the preceding claims, **characterized in that** a circumferential seal (12) is provided around the pull-out element (6), which is fixed to the rear (5) of the vehicle.

7. Mobile home according to one of the preceding claims, **characterized in that** the pull-out element (6) is displaceable over at least 1 m, preferably between 1.2 m and 1.5 m.

8. Mobile home according to one of the preceding claims, **characterized in that** the pull-out element (6) is movably held on at least two pull-out guides (9).

9. Mobile home according to one of the preceding claims, **characterized in that** a drive for moving the pull-out element (6) is provided.

## Revendications

1. Camping-car (1) avec un habitacle de véhicule qui est entouré de parois latérales (4), d'une partie arrière (5), d'un plancher et d'un plafond, dans lequel un élément coulissant (6) est prévu à l'arrière (5), lequel peut être déplacé d'une position de conduite dans une position d'extraction faisant saillie à l'arrière, dans lequel un meuble de couchage (20) est fixé dans l'élément coulissant (6), lequel meuble comprend au moins deux parties (21, 22) qui forment une surface de couchage en position étendue et sont orientées en angle l'une par rapport à l'autre en position de voyage, une partie arrière (21) du meuble de couchage (20) étant orientée horizontalement, **caractérisé en ce qu'**une partie avant (22) du meuble de couchage (20) peut être rabattue à partir d'une position couchée vers le bas à partir d'une orientation horizontale.

2. Camping-car selon la revendication 1, **caractérisé en ce que** le meuble de couchage (20) comprend un matelas pliable (24) qui est supporté sur au moins deux parties pivotantes (21, 22).

3. Camping-car selon la revendication 1 ou 2, **caractérisé en ce que** le meuble de couchage (20) s'étend sur toute la largeur intérieure de l'élément coulissant (6).

4. Camping-car selon l'une des revendications précédentes, **caractérisé en ce qu'**un compartiment de rangement (18) accessible de l'extérieur est formé sous le meuble de couchage (20), qui peut être fermé au moyen d'un élément de fermeture (10) qui peut être ouvert.

5. Camping-car selon l'une des revendications précédentes, **caractérisé en ce que** l'élément coulissant (6) est en forme de boîte avec une ouverture vers l'intérieur du véhicule et avec des éléments de paroi isolants.

6. Camping-car selon l'une des revendications précédentes, **caractérisée en ce qu'**un joint périphérique (12) est prévu autour de l'élément coulissant (6), qui est fixé à l'arrière (5) du véhicule.

7. Camping-car selon l'une des revendications précédentes, **caractérisée en ce que** l'élément coulissant (6) est déplaçable sur au moins 1 m, de préférence entre 1,2 m et 1,5 m.

8. Camping-car selon l'une des revendications précédentes, **caractérisée en ce que** l'élément coulissant (6) est maintenu de manière mobile sur au moins deux guides coulissants (9).

9. Camping-car selon l'une des revendications précédentes, **caractérisée en ce qu'**il est prévu un entraînement pour déplacer l'élément coulissant (6).
